Europäisches Patentamt

European Patent Office

Office européen des brevets

(11) Veröffentlichungsnummer: **0 096 872**
**B1**

# (12) EUROPÄISCHE PATENTSCHRIFT

(45) Veröffentlichungstag der Patentschrift: **28.09.88**

(51) Int. Cl.⁴: **H 04 L 25/02**

(21) Anmeldenummer: **83105719.5**

(22) Anmeldetag: **10.06.83**

(54) **Sendestufe für digitale Signale hoher Schrittgeschwindigkeit.**

(30) Priorität: **14.06.82 DE 3222341**

(43) Veröffentlichungstag der Anmeldung:
**28.12.83 Patentblatt 83/52**

(45) Bekanntmachung des Hinweises auf die
Patenterteilung:
**28.09.88 Patentblatt 88/39**

(84) Benannte Vertragsstaaten:
**AT BE CH DE FR GB IT LI LU NL SE**

(56) Entgegenhaltungen:
**US-A-2 996 578**

**NACHRICHTENTECHNISCHE ZEITSCHRIFT,
Band 32, Nr. 9, September 1979, Seiten
608-611, Berlin, DE; H. BAUCH et al.:
"Übertragung von 565-Mbit/s-Signalen über
Koaxialkabel"**

(73) Patentinhaber: **Siemens Aktiengesellschaft
Berlin und München
Wittelsbacherplatz 2
D-8000 München 2 (DE)**

(72) Erfinder: **Meyer, Fritz, Dr.-Ing.
Wifostrasse 5
D-8034 Germering (DE)**

(56) References cited:
**REVIEW OF THE ELECTRICAL
COMMUNICATION LABORATORY, Band 17,
Nr. 1-2, Januar-Februar 1969, Seiten 22-48,
Tokyo, JP; T. ARATANI et al.: "An experimental
200 Mb/s PCM repeater"**

**NEC RESEARCH & DEVELOPMENT, Band 51,
Oktober 1978, Seiten 56-67, Tokyo, JP; T.
YAMADA et al.: "400Mb/s Digital transmission
system on coaxial cable"**

## Beschreibung

Die Erfindung betrifft eine Sendestufe für digitale Signale hoher Schrittgeschwindigkeit mit einer eingangsseitig im Gegentakt angesteuerten Verstärkeranordnung.

Der Ausbau der Übertragungssysteme für digitale Signale führt zu Übertragungssystemen für digitale Signale mit Schrittgeschwindigkeiten von einigen hundert MBaud, die beispielsweise über Koaxialkabel übertragen werden. Ein wesentlicher Teil dieser Koaxialkabel ist bereits beim Ausbau des Trägerfrequenznetzes mitverlegt worden und war ursprünglich als Reservekabel für dieses Netz vorgesehen. Die Regeneratoren für die digitalen Signale sind deshalb in die bereits vorhandenen Trägerfrequenzverstärkerstellen mit einzubauen, so daß der Regeneratorabstand des digitalen Netzes dem Verstärkerabstand des entsprechenden Trägerfrequenznetzes entsprechen muß. Aus der Dämpfung des Koaxialkabels für die zu übertragenden Signale einerseits und dem Regeneratorabstand andererseits ergibt sich die benötigte Sendeleistung, die von der Sendestufe des jeweiligen Zwischenregenerators oder des Leitungsendgerätes abgegeben werden muß. Da eine derartige Sendestufe nahezu direkt mit der nachfolgenden Kabelstrecke verbunden ist, muß eine geeignete Sendestufe auch einen ausreichenden Schutz gegen in der nachfolgenden Kabelstrecke auftretende Überspannungen, beispielsweise durch Blitzschlag verursacht, aufweisen.

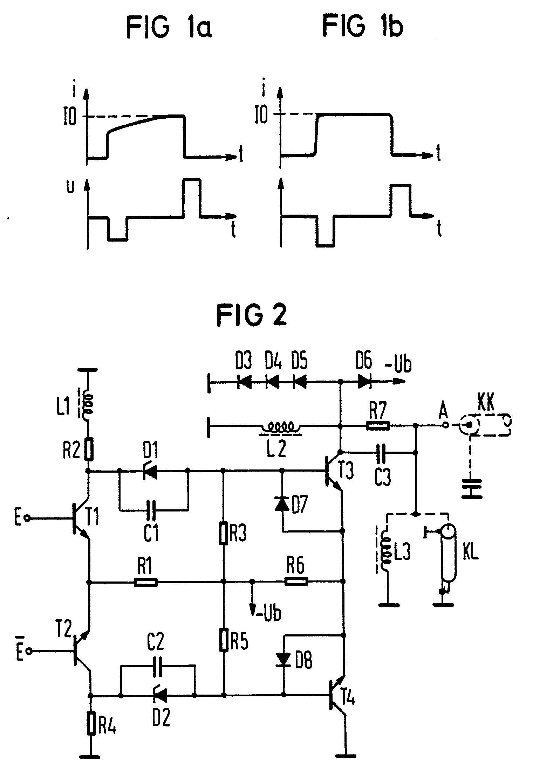

In der DE—A—29 37 697 wurde bereits eine Sendestufe für die Übertragung von Signalen mit den erwähnten Schrittgeschwindigkeiten beschrieben, die insbesondere für die Übertragung mehrstufiger digitaler Signale geeignet ist. Um ausreichende Begrenzerwirkung und Flankensteilheit zu erreichen, ist bei der Sendestufe jedoch ein relativ aufwendiger Abgleich notwendig, dieser wird besonders schwierig, wenn zusätzlich Schutzschaltungen gegen Überspannungen vorgesehen werden müssen. Eine weitere Schwierigkeit beim Aufbau derartiger Sendestufen ergibt sich dadurch, daß in den betrachteten Frequenzbereichen der in Fig. 1a dargestellte Hochstromeffekt auftreten kann. In der Fig. 1a ist der Kollektorstrom eines der Endstufentransistoren in Abhängigkeit von einem eingangsseitigen Rechtecksprung dargestellt. Es zeigt sich, daß die Anstiegsgeschwindigkeit für den Kollektorstrom abnimmt. Die erzeugen Impulse weisen damit eine erheblich Dachschräge auf, so daß Einschalt- und Auschaltflanke der Impulse und damit auch die aus diesen Flanken abgeleiteten Impulse unterschiedliche Größe aufweisen können.

Der vorliegenden Erfindung liegt also die Aufgabe zugrunde, eine Sendestufe der eingangs erwähnten Art zu entwickeln, die ausreichende Begrenzerwirkung und Flankensteilheit bei relativ wenig aufwendigem Abgleich und wenig aufwendigem Aufbau bei geringer Dachschräge der erzeugten Rechteckimpuls aufweist.

Erfindungsgemäß wird die Aufgabe dadurch gelöst, daß ein erster emittergekoppelter Differenzverstärker vorgeehen ist, der eine induktive Belastung aufweist und dessen Ausgänge über Gleichstromkoppelglieder mit den Eingängen eines zweiten Differenzverstärkers verbunden sind, daß ein Ausgang des zweiten Differenzverstärkers über ein niederohmiges RC-Glied mit dem Innenleiter eines nachgeschalteten Koaxialkabels und mit einer Fernspeisedrossel sowie außerdem über Schutzdioden mit Bezugspotential verbunden ist.

Eine bevorzugte Variante der erfindungsgemäßen Sendestufe ergibt sich dadurch, daß mit einem Eingang für das zu verstärkende digitale Signale der Basisanschluß eines ersten npn-Transistors verbunden ist, daß mit dem Eingang für das inverse digitale Signal der Basisanschluß eines zweiten npn-Transistors verbunden ist, daß die Emitteranschlüsse des ersten und des zweiten Transistors miteinander und über einen ersten Widerstand mit einer Quelle für negative Betriebsspannung verbunden sind, daß der Kollektoranschluß des ersten Transistors über eine Reihenschaltung aus einem zweiten Widerstand und einer ersten Induktivität mit Bezugspotential verbunden ist, daß der Kollektor des ersten Transistors weiterhin über ein erstes Gleichstromkoppelglied aus einer ersten Zenerdiode und einem parallelgeschalteten ersten Kondensator mit dem Basisanschluß eines dritten Transistors und mit dem einen Anschluß eines dritten Widerstandes verbunden ist, daß der andere Anschluß des dritten Widerstandes mit der Betriebsspannungsquelle verbunden ist, daß der Kollektoranschluß des zweiten Transistors über einen vierten Widerstand mit Bezugspotential und außerdem über ein zweites Gleichstromkoppelglied aus einer zweiten Zenerdiode und einem parallelgeschalteten zweiten Kondensator mit dem Basisanschluß eines vierten Transistors und mit dem einen Anschluß eines fünften Widerstandes verbunden ist, daß der andere Anschluß des fünften Widerstandes mit der Betriebsspannungsquelle verbunden ist, daß die Emitteranschlüsse des dritten und des vierten Transistors miteinander und über einen sechsten Widerstand mit der Betriebsspannungsquelle verbunden ist, daß der Kollektoranschluß des vierten Transistors mit Bezugspotential verbunden ist, daß der Kollektoranschluß des dritten Transistors über eine in Sperrichtung gepolte Schutzdiode mit der Betriebsspannungsquelle verbunden ist und außerdem über eine zweite Induktivität mit Bezugspotential verbunden ist, daß der Kollektoranschluß des dritten Transistors außerdem über einen siebenten Widerstand und einen dazu parallelgeschalteten dritten Kondensator mit dem Ausgangsanschluß und mit dem einen Anschluß einer dritten Induktivität verbunden ist, deren anderer Anschluß an Bezugspotential angeschlossen ist.

Eine im Hinblick auf den Überspannungsschutz verbesserte Weiterbildung der erfindungsgemäßen Sendestufe ergibt sich dadurch, daß der Kollektoranschluß des dritten Transistors über eine im normalen Betrieb in Sperrichtung gepolte Dioden-Reihenschaltung mit Bezugspotential verbunden ist, daß der Emitteranschluß des dritten Transistors über eine im normalen Betrieb in Sperrichtung gepolte siebente Diode mit dem Basisanschluß des dritten Transistors und daß der Emitteranschluß des vierten Transistors über eine achte, im normalen Betrieb in Sperrichtung gepolte Diode mit dem Basisanschluß des vierten Transistors verbunden ist.

Besonders vorteilhaft bei der erfindungsgemäßen Sendestufe ist die Möglichkeit, diese zur Erzeugung pseudoternärer Signale einzurichten. Für diesen Fall ist eine Weiterbildung der erfindungsgemäßen Sendestufe zweckmäßig, bei der zur Erzeugung AMI-codierter Signale die Eingangssignale im Differenz-Binärcode vorliegen und die dritte Induktivität durch eine am Ende kurzgeschlossene und mit Bezugspotential verbundene Stichleitung ersetzt ist, deren Länge so gewählt ist, daß die einfache Laufzeit der Signale in der Stichleitung einer halben Bitdauer der eingangsseitig anliegenden binären Signale entspricht.

Die Erfindung soll im folgenden anhand der Zeichnung näher erläutert werden. In der Zeichnung zeigen

Fig. 1a, b idealisierte Verläufe des Kollektorstromes eines Endstufentransistors und

Fig. 2 die Schaltung der erfindungsgemäßen Sendestufe.

Wie einleitend bereits erwähnt, ist in der Fig. 1a der Kollektorstrom eines Endstufentransistors dargestellt, der sich unter dem Einfluß eines Hochstromeffektes bei der Ansteuerung mit einem Rechteckimpuls ergibt. Weiterhin ist in der Fig. 1a die Ausgangsspannung dargestellt, die sich ergibt, sofern aus dem darüber dargestellten Impuls mittels einer Stickleitung in an sich bekannter Weise ein positiver und ein negativer Impuls, also ein pseudoternäres Signal, erzeugt wird. Die Unterschiede in der Anstiegs- und der Abfallflanke des Stromimpulses wirken sich in unterschiedlich großen pseudoternären Impulsen aus.

In der Fig. 1b ist der Verlauf des Kollektorstromes für einen in der Schaltung nach der Fig. 2 enthaltenen Endstufentransistor dargestellt, außerdem sind die aus diesem Kollektorstrom erzeugten pseudoternären Impulse dargestellt, die entsprechend der Rechteckform des Kollektorstromes symmetrisch sind.

Die Sendestufenschaltung nach der Fig. 2 enthält einen Eingang E für das zu verstärkende digitale Signal, der mit dem Basisanschluß eines ersten npn-Transistors T1 verbunden ist, und einen Eingang $\bar{E}$ für das inverse digitale Signal, der mit dem Basisanschluß eines zweiten npn-Transistors T2 verbunden ist. Die Emitteranschlüsse beider Transistoren sind miteinander und über einen ersten Widerstand R1 mit einer Quelle für eine negative Betriebsspannung −Ub verbunden. Damit ergibt sich eingangsseitig ein im Gegentakt angesteuerter emittergekoppelter Differenzverstärker.

Der Kollektoranschluß des ersten Transistors T1 ist über eine Reihenschaltung eines zweiten Widerstandes R2 und einer ersten Induktivität L1 mit Bezugspotential verbunden. Die erste Induktivität L1 wirkt als Kompensationsinduktivität, die durch den vergleichsweise neiderohmigen Widerstand R2 bedämpft wird und für eine Höhenanhebung der vom ersten emittergekoppelten Differenzverstärker verstärkten Signal sorgt. Weiterhin ist der Kollektor des ersten Transistors T1 über ein aus einer ersten Zenerdiode D1 und einem dazu parallelgeschalteten ersten Widerstand C1 gebildetes Gleichstromkoppelglied mit dem Basisanschluß eines dritten Transistors T3 verbunden. Analog ist der Kollektoranschluß des zweiten Transistors T2 über einen vierten Widerstand R4 mit Bezugspotential und über ein weiteres Gleichstromkoppelglied aus einer zweiten Zenerdiode D2 mit parallelgeschaltetem zweiten Kondensator C2 mit dem Basisanschluß eines vierten Transistors T4 verbunden. Die Zenerdioden stellen in beiden Fällen der gleichspannungsmäßige Anpassung zwischen der Kollektorspannung der Vorstufentransistoren T1, T2 und der Basisspannung der Endstufentransistoren T3, T4 her.

Der Basisanschluß des dritten Transistors T3 ist außerdem über einen dritten Widerstand R3 mit der Betriebsspannungsquelle −Ub verbunden, an die auch der Basisanschluß des vierten Transistors T4 über einen fünften Widerstand R5 angeschlossen ist. Die Emitteranschlüsse des dritten und des vierten Transistors T3, T4 sind miteinander und über einen sechsten Widerstand R6 mit der Betriebsspannungsquelle −Ub verbunden, so daß auch die Endstufentransistoren einen emittergekoppelten Differenzverstärker bilden. Der Kollektoranschluß des vierten Transistors T4 ist direkt mit Bezugspotential verbunden, während der Kollektoranschluß des dritten Transistors T3 über eine im normalen Betrieb in Sperrichtung gepolte Schutzdiode D6 mit der Betriebsspannungsquelle −Ub, über eine Reihenschaltung aus drei im normalen Betrieb in Sperrichtung gepolte Schutzdioden D3, D4, D5 und dazu parallel über eine zweite Induktivität L2 in Form einer Hochfrequenzdrossel mit Bezugspotential verbunden.

Die Diodenreihenschaltung dient ebenso wie die Hochfrequenzdrossel zur Ableitung von Überspannungen, die von der angeschlossenen Kabelstrecke KK zur Sendestufe gelangen. Zur Verringerung dieser Überspannungen dient weiterhin ein RC-Glied, das an einer Seite mit dem Kollektoranschluß des dritten Transistors T3 verbunden ist, aus der Parallelschaltung eines relativ niederohmigen siebenten Widerstandes R7 und eines dritten Kondensators C3 besteht und außerdem mit dem Innenleiter des angeschlossenen Koaxialkabels verbunden ist. Bei der Übertragung von binären Signalen ist mit dem Innenleiter des Koaxialkabels KK weiterhin eine dritte Induktivität L3 in Form einer Fernspeisedrossel verbunden.

Bei der Erzeugung von AMI-codierten Leitungssignalen aus im Differenz-Binärcode vorliegenden Eingangssignalen ist die Fernspeisedrossel in an sich bekannter Weise durch eine Stichleitung KL ersetzt, die am Ende kurzgeschlossen und mit Bezugspotential verbunden ist, während auf der anderen Seite der eine Anschluß mit Bezugspotential und der andere mit dem Innenleiter des Koaxialkabels verbunden ist. Die Länge der Stichleitung ist dabei so gewählt, daß die einfache Laufzeit der Impulse in der Stichleitung einer halben Bitdauer der binären Eingangsimpulse entspricht. Die Reflexion eines Spannungssprungs am kurzgeschlossenen Ende der Stichleitung führt dadurch im Abstand von einer Bitdauer zu einem zweiten Impulse, der gegenüber dem ersten Impulse bzw. der ersten Impulsflanke umgekehrte Polarität aufweist. Neben dieser Umformung der Ausgangssignale dient die Stichleitung gleichzeitig als Fernspeiseweiche, indem sie den Fernspeisestrom vom Innenleiter des Koaxialkabels nach Masse ableitet. Außerdem ist die Stichleitung gleichzeitig eine der Schutzmaßnahmen gegenüber auftretenden Überspannungen, da diese durch die vergleichsweise sehr niederohmige Stichleitung sehr kurzzeitig nach Masse abgeleitet werden. Ein weiterer Schutz der Endstufentransistoren gegen Überspannungen ergibt sich durch das aus dem dritten Kondensator C3 und dem siebenten Widerstand R7 bestehende RC-Glied.

Bei den verwendeten Hochfrequenztransistoren sind bei Überspannungen insbesondere die nur mit sehr geringen Sperrspannungen belastbare Emitterdioden gefährdet. Im Ausführungsbeispiel sind deshalb zwischen Emitter und Basis des dritten Transistors T3 eine siebente Diode D7 in Sperrichtung gepolte Schutzdiode und zwischen Emitter und Basis des vierten Transistors T4 eine achte Diode D8 in Sperrichtung gepolte Schutzdiode eingeschaltet.

**Patentansprüche**

1. Sendestufe für digitale Signale hoher Schrittgeschwindigkeit mit einer eingangsseitig im Gegentakt angesteuerten Verstärkeranordnung, dadurch gekennzeichnet, daß ein erster emittergekoppelter Differenzverstärker (T1, T2) vorgesehen ist, der eine induktive Belastung (L1) aufweist und dessen Ausgänge über Gleichstromkoppelglieder (D1, C1; D2, C2) mit den Eingangen eines zweiten Differenzverstärkers (T3, T4) verbunden sind, daß ein Ausgang des zweiten Differenzverstärkers über ein niederohmiges RC-Glied (C3, R7) mit dem Innenleiter eines nachgeschalteten Koaxialkabels und mit einer Fernspeisedrossel (L3, KL) sowie außerdem über Schutzdioden (D3, D4, D5) mit Bezugspotential verbunden ist.

2. Sendestufe nach Anspruch 1, dadurch gekennzeichnet, daß mit einem Eingang (E) für das zu verstärkende digitale Signal der Basisanschluß eines ersten npn-Transistors (T1) verbunden ist, daß mit dem Eingang (Ē) für das inverse digitale Signal der Basisanschluß eines zweiten npn-Transistors (T2) verbunden ist, daß die Emitteranschlüsse des ersten und des zweiten Transistors (T1, T2) miteinander und über einen ersten Widerstand (R1) mit einer Quelle (−Ub) für negative Betriebsspannung verbunden sind, daß der Kollektoranschluß des ersten Transistors über eine Reihenschaltung aus einem zweiten Widerstand (R2) und einer ersten Induktivität (L1) mit Bezugspotential verbunden ist, daß der Kollektor des ersten Transistors (T1) weiterhin über ein erstes Gleichstromkoppelglied aus einer ersten Zenerdiode (D1) und einem parallelgeschalteten ersten Kondensator (C1) mit dem Basisanschluß eines dritten Transistors (T3) und mit dem einen Anschluß eines dritten Widerstandes (R3) verbunden ist, daß der andere Anschluß des dritten Widerstandes mit der Betriebsspannungsquelle (−Ub) verbunden ist, daß der Kollektoranschluß des zweiten Transistors (T2) über einen vierten Widerstand (R4) mit Bezugspotential und außerdem über ein zweites Gleichstromkoppelglied aus einer zweiten Zenerdiode (D2) und einem parallelgeschalteten zweiten Kondensator (C2) mit dem Basisanschluß eines vierten Transistors (T4) und mit dem einen Anschluß eines fünften Widerstandes (R5) verbunden ist, daß der andere Anschluß des fünften Widerstandes (R5) mit der Betriebsspannungsquelle (−Ub) verbunden ist, daß die Emitteranschlüsse des dritten und des vierten Transistors (T3, T4) miteinander und über einen sechsten Widerstand mit der Betriebsspannungsquelle (−Ub) verbunden sind, daß der Kollektoranschluß des vierten Transistors (T4) mit Bezugspotential verbunden ist, daß der Kollektoranschluß des dritten Transistors (T3) über eine in Sperrichtung gepolte Schutzdiode (D6) mit der Betriebsspannungsquelle (−Ub) verbunden ist und außerdem über eine zweite Induktivität (L2) mit Bezugspotential verbunden ist, daß der Kollektoranschluß des dritten Transistors (T3) außerdem über einen siebenten Widerstand (R7) und einen dazu parallelgeschalteten dritten Kondensator (C3) mit dem Ausgangsanschluß (A) und mit dem einen Anschluß einer dritten Induktivität (L3) verbunden ist, deren anderer Anschluß an Bezugspotential angeschlossen ist.

3. Sendestufe nach Patentanspruch 1 oder 2, dadurch gekennzeichnet, daß der Kollektoranschluß des dritten Transistors (T3) über eine im normalen Betrieb in Sperrichtung gepolte Dioden-Reihenschaltung mit Bezugspotential verbunden ist, daß der Emitteranschluß des dritten Transistors über eine im normalen Betrieb in Sperrichtung gepolte siebente Diode (D7) mit dem Basisanschluß des dritten Transistors (T3) und daß der Emitteranschluß des vierten Transistors (T4) über eine achte, im normalen Betrieb in Sperrichtung gepolte Diode (D8) mit dem Basisanschluß des vierten Transistors (T4) verbunden ist.

4. Sendestufe nach Patentanspruch 1—3, dadurch gekennzeichnet, daß zur Erzeugung AMI-codierter Signale die Eingangssignale im Differenz-Binärcode vorliegen und die dritte Induktivität (L3) durch eine am Ende kurzgeschlossene und mit Bezugspotential verbundene Stichleitung (KL) ersetzt ist, deren Länge so gewählt ist, daß die einfache Laufzeit der Signale in der Stichleitung einer halben Bitdauer der eingangsseitig anliegenden binären Signale entspricht.

**Revendications**

1. Etage d'émission pour signaux numériques à grande vitesse d'avancement qui comporte un montage amplificateur alimenté symétriquement côté entrée, caractérisé en ce qu'est prévu un premier amplificateur différentiel (T1, T2) à couplage d'émetteur, qui présente une charge (L1) inductive, et dont les sorties sont reliées aux entrées d'un second amplificateur différentiel (T3, T4), par l'intermédiaire d'organes de couplage en courant continu (D1, C1; D2, C2), qu'une sortie du second amplificateur différentiel est reliée, par l'intermédiaire d'une cellule RC (C3, R7), de basse impédance à l'âme d'un câble coaxial placé en aval et à une bobine d'alimentation à distance (L3, KL), et est, par ailleurs, portée au potentiel de référence, par l'intermédiaire de diodes de protection (D3, D4, D5).

2. Etage d'émission selon la revendication 1, caractérisé en ce que la borne de base d'une premier transistor NPN (T1) est reliée à une entrée (E) destinée au signal numérique à amplifier, que la borne de base d'un deuxième transistor NPN (T2) est reliée à l'entrée (E̅) destinée au signal numérique inverse, que les bornes d'émetteur du premier et du deuxième transistors (T1, T2) sont reliées entre elles et, par l'intermédiaire d'une première résistance (R1), à une source (−Ub) pour la tension d'alimentation négative, que la borne de collecteur du premier transistor est portée au potentiel de référence, par l'intermédiaire d'un couplage en série d'une deuxième résistance (R2) et d'une première inductance (L1), que le collecteur du premier transistor est, par ailleurs, relié, par l'intermédiaire d'un premier organe de couplage en courant continu, constitué d'une première diode Zener (D1) et d'un premier condensateur (C1) monté en parallèle, à la borne de base d'un troisième transistor (T3) et à l'une des bornes d'une troisième résistance (R3), que l'autre borne de la troisième résistance est reliée à la source de tension d'alimentation (−Ub), que la borne de collecteur du deuxième transistor (T2) est portée au potentiel de référence, par l'intermédiaire d'une quatrième résistance (R4), et est, par ailleurs, reliée, par l'intermédiaire d'un second organe de couplage en courant continu, constitué d'une seconde diode Zener (D2) et d'un deuxième condensateur (C2) monté en parallèle, à la borne de base d'un quatrième transistor (T4) et à l'une des bornes d'une cinquième résistance (R5), que l'autre borne de la cinquième résistance (R5) est reliée à la source de tension d'alimentation (−Ub), que les bornes d'émetteur du troisième et du quatrième transistors (T3, T4) sont reliées entre elles et, par l'intermédiaire d'une sixième résistance, à la source de tension d'alimentation (−Ub), que la borne de collecteur du quatrième transistor (T4) est portée au potentiel de référence, que la borne de collecteur du troisième transistor (T3) est reliée à la source de tension d'alimentation (−Ub), par l'intermédiaire d'une diode de protection (D6) polarisée en inverse, et est, par ailleurs, portée au potentiel de référence, par l'intermédiaire d'une deuxième inductance (L2), que la borne de collecteur du troisième transistor est, par ailleurs, reliée, par l'intermédiaire d'une septième résistance (R7) et d'un troisième condensateur (C3) monté en parallèle, à la borne de sortie (A) et à l'une des bornes d'une troisième inductance (L3), dont l'autre borne est portée au potentiel de référence.

3. Etage d'émission selon la revendication 1 ou 2, caractérisé en ce que la borne de collecteur du troisième transistor (T3) est portée au potentiel de référence, par l'intermédiaire d'un couplage en série de diodes qui, en fonctionnement normal sont polarisées en inverse, que la borne d'émetteur du troisième transistor est reliée à la borne de base du troisième transistor (T3), par l'intermédiaire d'une septième diode (D7) qui en fonctionnement normal est polarisée en inverse, et que la borne d'émetteur du quatrième transistor (T4) est reliée à la borne de base du quatrième transistor (T4), par l'intermédiaire d'une huitième diode (D8) qui, en fonctionnement normal, est polarisée en inverse.

4. Etage d'émission selon la revendication 1 à 3, caractérisé en ce que, pour produire des signaux codés de type AMI, les signaux d'entrée sont présentés en code binaire différentiel, et la troisième inductance (L3) est remplacée par un tronçon de ligne (KL), court-circuité à son extrémité et porté au potentiel de référence, et dont la longueur est choisie de manière à ce que la simple durée de propagation des signaux dans le tronçon de ligne, corresponde à une demi-urée de bit des signaux binaires, présents côté entrée.

**Claims**

1. A transmitter stage for digital signals with a high transmission speed, comprising an amplifier arrangement driven in push-pull at its input, characterised in that a first emitter-coupled differential amplifier (T1, T2) is provided, which has an inductive load (L1) and outputs connected via. d.c. coupling elements (D1, C1; D2, C2) to the inputs of a second differential amplifier (T3, T4), and that an output of the second differential amplifier is connected vi a low-ohmic RC component (C3, R7) to the inner conductor of a following coaxial cable, to a remote-supply choke (L3, KL), and also connected to reference potential via protective diodes (D3, D4, D5).

2. A transmitter stage as claimed in Claim 1, characterised in that an input (E) for the digital signal which is to be amplified is connected to the base terminal of a first npn-transistor (T1), that the input (E̅) for the inverse digital signal is connected to the base terminal of a second npn-transistor (T2), that the emitter terminals of the first and second transistors (T1, T2) are connected to one another and via a first resistor (R1) to a source (−Ub) for negative operating potential, that the collector terminal of the first transistor is connected to reference potential via a series arrangement of a second resistor (R2) and a first inductance (L1), that the collector of the first transistor (T1) is also connected to the base terminal of a third transistor (T3) via a first d.c. coupling element, consisting of a first Zener diode (D1) and a parallel-connected first capacitor (C1), and to a first terminal of a third resistor (R3), that the other terminal of the third resistor is connected to the operating voltage source (−Ub), that the collector terminal of the second transistor (T2) is connected via a fourth resistor (R4) to reference potential and is also connected to the base terminal of a fourth transistor (T4) via a second d.c. coupling element, consisting of a second Zener diode (D2) and a parallel-connected second capacitor (C2), and to the first terminal of a fifth resistor (R5), that the other terminal of the fifth resistor (R5) is connected to the operating voltage source (−Ub), that the emitter terminals of the third and fourth transistors (T3, T4) are connected to one another and via a sixth resistor to the operating voltage source (−Ub), that the collector terminal of the fourth transistor (T4) is connected to reference potential, that the collector terminal of the third transistor (T3) is connected to the operating voltage source (−Ub) via a protective diode (D6), poled in the blocking direction, and is also connected via a second inductance (L2) to reference potential, that the collector terminal of the third transistor (T3) is also connected to the output terminal (A) via a seventh resistor (R7) and via a third capacitor (C3) connected in parallel with the seventh resistor (R7), and also to the first terminal of a third inductance (L3), whose other terminal is connected to reference potential.

3. A transmitter stage as claimed in Claim 1 or 2, characterised in that the collector terminal of the third transistor (T3) is connected to reference potential via a series arrangement of diode which is poled in the blocking direction in normal operation, that the emitter terminal of the third transistor is connected to the base terminal of the third transistor (T3) via a seventh diode (D7) which is poled in the blocking direction in normal operation, and that the emitter terminal of the fourth transistor (T4) is connected to the base terminal of the fourth transistor (T4) via an eighth diode (D8) which is poled in the blocking direction in normal operation.

4. A transmitter stage as claimed in Claims 1 to 3, characterised in that for the generation of AMI-coded signals, the input signals occur in the difference-binary code and the third inductance (L3) is in the form of a tap line (KL) short-circuited at its end and connected to reference potential, and the length of which is selected to be such that the single delay time of the signals in the tap line corresponds to half the bit duration of the binary signals occurring at the input end.

# FIG 1a

# FIG 1b

# FIG 2